# FASCICULE DE BREVET EUROPEEN

(11) **EP 3 317 631 B1**
(45) Date de publication et mention de la délivrance du brevet: **12.06.2019**
(21) Numéro de dépôt: 16739233.1
(22) Date de dépôt: 21.06.2016
(51) Int. Cl.: G01M 1/28, G01M 1/04, F16F 15/32, F01D 5/02, F01D 25/28

(54) **OUTILLAGE POUR L'ÉQUILIBRAGE D'UN MODULE DE TURBOMACHINE**
WERKZEUG ZUM AUSWUCHTEN EINES TURBINENMOTORMODULS
TOOL FOR BALANCING A TURBINE ENGINE MODULE

(30) Priorité: 01.07.2015 FR 1556220
(43) Date de publication de la demande: 09.05.2018
(73) Titulaire: Safran Aircraft Engines, 75015 Paris (FR)
(72) Inventeur: LUINAUD, Alain, Roland, 77550 Moissy-Cramayel Cedex (FR); DECOCQ, Alain, 77550 Moissy-Cramayel Cedex (FR); VIVIANDE, François, 77550 Moissy-Cramayel Cedex (FR)
(74) Mandataire: Gevers & Orès
(86) Numéro de dépôt international: PCT/FR2016/051513
(87) Numéro de publication internationale: WO 2017/001745

(56) Documents cités:
- US-A- 3 146 623
- US-A- 4 586 225
- Heinz Bloch ET AL: "Machinery Component Maintenance and Repair; Chapter 6: Balancing of Machinery Components", , 2005, pages 258-358, XP055270741, ISBN: 978-0-7506-7726-4 Extrait de l'Internet: URL:https://maaplibrary.files.wordpress.co m/2014/05/chapter-61.pdf [extrait le 2016-05-04]

## Description

L'invention concerne un outillage pour l'équilibrage d'un module de turbomachine.

L'invention concerne plus particulièrement un outillage pour l'équilibrage d'un module de turbomachine de masse élevée ou de grande dimension dans une équilibreuse horizontale, du type de celles utilisées dans le domaine de la motorisation aéronautique à des fins d'équilibrage de rotors de turbomachines aéronautiques.

### ETAT DE LA TECHNIQUE ANTERIEURE

Une turbomachine comporte de manière connue un ou plusieurs rotors qui sont montés tournants dans un stator.

Une turbomachine moderne actuelle est réalisée selon une conception modulaire et elle comporte à ce titre au moins un rotor qui est constitué d'une pluralité d'éléments fabriqués séparément et assemblés mécaniquement. De même, le stator d'une telle turbomachine est constitué d'une pluralité de carters de stators qui sont assemblés les uns aux autres.

Ainsi, une turbomachine est constituée d'un assemblage de modules dont au moins certains comportent au moins un carter de stator et un rotor associé qui comporte pour l'essentiel un arbre de rotor d'axe longitudinal A et au moins un étage d'aubes, qui est relié à une partie d'extrémité longitudinale dudit arbre de rotor, et qui est entouré par ledit carter de stator.

Conventionnellement, l'équilibrage du rotor est réalisé indépendamment du stator. Une telle configuration est par exemple connue des documents Heinz Bloch et al "Machinery Comportent and repair", chapter 6*,* et US-3.146.623-A, qui décrivent l'équilibrage de rotors nus.

Selon une autre configuration connue, l'équilibrage du rotor en place dans le stator. L'ensemble du rotor et du stator, ou module, est réalisé directement dans une équilibreuse, c'est-à-dire que les éléments constitutifs dudit module de turbomachine sont montés et supportés directement dans l'équilibreuse, sans interface de quelque sorte que ce soit. Le document US-4.586.225-A décrit un tel équilibrage.

Ainsi, le carter de stator est fixé directement à un bâti de l'équilibreuse, et le rotor correspondant est supporté directement par des paliers de l'équilibreuse.

Cette configuration donne globalement satisfaction pour des modules de tailles réduites ou moyennes, mais n'est pas adaptée pour des modules de dimensions et de masses élevées pour lesquels l'encombrement et le poids représentent une contrainte en termes de manipulation dudit module dans ladite équilibreuse.

Par ailleurs, l'élévation de la masse du module associé à l'outillage nécessite de vérifier que les modes propres de l'ensemble se situent à l'extérieur du domaine d'utilisation de l'équilibreuse.

Il n'est en outre pas envisageable de déplacer manuellement un module de turbomachine de taille élevée pour l'installer dans l'équilibreuse sans risque de détérioration.

Les jeux fonctionnels entre l'étage d'aubes et le carter de stator sont sensiblement les mêmes, que le module de turbomachine soit un module de dimension petite ou moyenne, ou un module de dimension élevée.

De ce fait, on comprend aisément qu'une manipulation d'un module de dimension élevée, plus susceptible d'entraîner un mouvement inapproprié du rotor par rapport au carter de stator, pourrait conduire à des contacts inappropriés entre les aubes de l'étage d'aube et le carter de stator, ce qui pourrait conduire à une détérioration dudit carter de stator et dudit étage d'aubes.

Il est donc nécessaire de prévoir un outillage permettant le support d'un module de turbomachine, son levage, son transport et son installation dans l'équilibreuse, ceci à l'aide d'un nombre d'interfaces réduit permettant un transport sécurisé dudit module sa dépose et sa fixation dans l'équilibreuse sans risque de dégradation.

Par ailleurs, l'équilibrage d'un module de turbomachine directement supporté par l'équilibreuse implique d'effectuer un certain nombre de réglages lors de l'installation de chaque module, ce qui accroît considérablement la durée totale d'une opération d'équilibrage. Il existe donc un besoin pour un outillage permettant de rationaliser les opérations d'équilibrage.

### EXPOSÉ DE L'INVENTION

L'invention satisfait à ce besoin en proposant un outillage pour l'équilibrage d'un module de turbomachine du type décrit précédemment, caractérisé en ce que ledit outillage comporte au moins :
- un cadre d'équilibrage, comportant des paliers configurés pour recevoir et guider l'arbre et l'étage d'aubes du rotor, la position d'au moins un desdits paliers étant réglable par rapport audit cadre,
- des premiers et deuxièmes moyens configurés pour être fixés audit carter de stator,
- des troisièmes et quatrièmes moyens prévus sur ledit cadre, pour fixer respectivement lesdits premier et deuxième moyens audit cadre, la position d'au moins un desdits troisièmes et quatrièmes moyens étant réglable par rapport audit cadre,
- des cinquièmes moyens de transport du cadre,
- des sixièmes moyens de support de cadre, prévus sur ledit cadre et configurés pour coopérer indifféremment avec l'équilibreuse et avec les cinquièmes moyens de transport du cadre, en vue du support dudit cadre dans lesdits cinquièmes moyens de transport et dans ladite équilibreuse.

Selon d'autres caractéristiques de l'invention :
- l'outillage comporte des septièmes moyens amovibles de blocage du rotor par rapport au carter de stator, destinés à immobiliser le rotor par rapport au carter de stator pendant son transport vers l'équilibreuse,
- lesdits premiers moyens comportent un plateau annulaire, qui est configuré pour être fixé à une première extrémité du carter de stator, qui est destiné à coopérer avec les troisièmes moyens du cadre, et dont un bord périphérique intérieur comporte les septièmes moyens amovibles de blocage du rotor,
- lesdits deuxièmes moyens comportent une couronne, qui est configurée pour être fixée à une seconde extrémité opposée du carter de stator, qui est destinée à coopérer avec les troisièmes moyens du cadre, et qui comporte un moyen de réglage de la position verticale et transversale du carter de stator,
- le cadre d'équilibrage comporte à une première extrémité à proximité du carter de stator un premier palier de guidage à appui décalé, qui comporte un élément tubulaire dont une première extrémité, destinée à être introduite dans le carter de stator, comporte au moins un palier recevant en rotation un arbre de support reçu dans l'étage d'aubes, et dont une seconde extrémité opposée, destinée à faire saillie hors du carter de stator, comporte au moins une portée périphérique qui est bridée sur un premier support solidaire du cadre.
- le cadre d'équilibrage comporte à une seconde extrémité un second palier de guidage à galets qui comporte une platine porteuse de deux galets sur lesquels l'arbre est destiné à rouler, ladite platine étant portée par un second support solidaire du cadre, et la position de ladite platine étant susceptible d'être réglée transversalement et verticalement par rapport audit second support, puis immobilisée définitivement dans une position réglée par l'intermédiaire de pions traversant la platine et ledit second support, et verrouillée dans ladite position par l'intermédiaire de vis de serrage agencées avec jeu entre la platine et le support,
- les cinquièmes moyens de transport du cadre comportent un chariot de transport apte à porter le cadre,
- les premier et second supports présentent une section semi-cylindrique et le chariot de transport et l'équilibreuse comportent des portées de réception semi-cylindriques, réglables transversalement et verticalement et complémentaires desdits premiers et second supports qui forment les sixièmes moyens de support de cadre, et des moyens de bridage desdits premier et second supports dans lesdites portées de réception,
- l'outillage comporte des huitièmes moyens de levage du module, comportant des élingues destinées à coopérer avec le plateau annulaire et avec un support d'extrémité de l'arbre du rotor et qui sont aptes à permettre le levage du module, et un support intermédiaire amovible liant l'arbre de rotor au carter de stator,
- l'outillage comporte des neuvièmes moyens de levage du cadre comportant des élingues destinées à coopérer avec le plateau annulaire et le second support, et qui sont aptes à permettre le levage du cadre,
- le cadre présente une forme ouverte en trapèze ou en U et il comporte au moins une branche horizontale apte à reposer sur le chariot et deux branches, notamment au moins une branche verticale, dont les extrémités portent les paliers du cadre,

L'invention concerne aussi un procédé de réglage avant équilibrage d'une équilibreuse, caractérisé en ce qu'il est mis en oeuvre à l'aide d'un ensemble d'étalonnage comportant :
- un carter de stator étalon, constitué d'un empilement de gueuses de masse correspondante à celle du stator du module, et qui est destiné à reposer sur le cadre selon une position correspondant sensiblement au point d'application du poids du carter de stator du module, et
- un rotor étalon équilibré, de moment d'inertie et de balourd correspondant sensiblement au rotor du module à équilibrer.

Et en ce qu'il comporte :
- une première étape de réglage statique de l'équilibreuse, au cours de laquelle on règle les portées semi-cylindriques de l'équilibreuse de manière qu'elles soient coaxiales,
- une deuxième étape au cours de laquelle on installe un rotor étalon et un carter de stator étalon dans le cadre,
- une troisième étape, au cours de laquelle on transfère le cadre équipé du rotor étalon et du carter de stator étalon sur les portées semi-cylindriques de l'équilibreuse,
- une quatrième étape de réglage dynamique sur la machine au cours de laquelle on ajuste la position verticale des galets par rapport à la platine du second palier, de manière que les axes de paliers soient parallèles à un axe d'un arbre d'entraînement de l'équilibreuse puis on perce la platine et le second support et on insère des piges dans les perçages effectués afin de définir la position de la platine, et enfin on verrouille la platine par rapport au second support.

L'invention concerne enfin un procédé d'équilibrage d'un module de turbomachine, caractérisé en ce qu'il comporte :
- une première étape de levage et de mise en place, à l'aide des huitièmes moyens de levage, d'un module dans un cadre reçu dans les cinquième moyens de transport d'un outillage du type décrit précédemment,
- une deuxième étape de transport du module équipé du cadre vers l'équilibreuse, à l'aide des cinquièmes moyens de transport,
- une troisième étape de levage et de transfert du module équipé du cadre dans l'équilibreuse à l'aide des neuvièmes moyens de levage, et
- une quatrième étape d'équilibrage du module dans l'équilibreuse.

### PRESENTATION DES FIGURES

L'invention sera mieux comprise et d'autres buts, détails, caractéristiques et avantages de celle-ci apparaîtront plus clairement au cours de la description explicative détaillée qui va suivre d'un mode de réalisation de l'invention donné à titre d'exemple purement illustratif et non limitatif en référence aux dessins schématiques annexés dans lesquels :
- la figure 1 est une vue de côté d'un module de turbomachine reçu dans un cadre d'équilibrage réalisé selon l'invention ;
- la figure 2 est une vue en perspective des premiers moyens configurés pour être fixés au carter de stator ;
- la figure 3 est une vue axiale des deuxièmes moyens configurés pour être fixés au carter de stator ;
- la figure 4 est une vue en perspective représentant les cinquièmes moyens de transport du cadre recevant un cadre ;
- la figure 5 est une vue en coupe axiale du premier palier de guidage décalé du module de la turbomachine ;
- les figures 6 et 7 sont des vues en perspective illustrant le montage d'un palier de guidage décalé dans le module de la turbomachine ;
- la figure 8 est une vue en perspective illustrant une première étape de levage et de mise en place, dans un cadre reçu dans les cinquièmes moyens de transport, d'un module de turbomachine à l'aide des huitièmes moyens de levage ;
- la figure 9 est une vue de détail en perspective illustrant le bridage du premier palier de guidage décalé dans le cadre ;
- la figure 10 est une vue de détail en perspective illustrant la réception de l'arbre de rotor dans le deuxième support et la réception du deuxième support dans une portée de réception des cinquièmes moyens de transport ;
- la figure 11 est une vue en perspective illustrant une troisième étape de levage et de transfert du module équipé de son cadre à l'aide des neuvièmes moyens de levage ;
- la figure 12 est une vue de côté illustrant le module équipé du cadre reçu dans les portées de l'équilibreuse ;
- la figure 13 est une vue en perspective représentant le module équipé du cadre en approche de l'équilibreuse ;
- la figure 14 est une vue en perspective illustrant le module équipé du cadre reçu dans l'équilibreuse ;
- la figure 15 est une vue d'ensemble en perspective d'un carter de stator étalon et d'un rotor étalon pour l'étalonnage d'un outillage selon l'invention ;
- la figure 16 est une vue en perspective représentant le carter de stator étalon et le rotor étalon reçus dans un cadre selon l'invention ;
- la figure 17 est une vue schématique d'une première étape de réglage statique d'une équilibreuse pour un procédé de réglage avant équilibrage selon l'invention ;
- les figures 18 et 19 sont des vues schématiques représentant la deuxième étape de réglage dynamique d'un procédé de réglage avant équilibrage selon l'invention.

### DESCRIPTION DETAILLEE D'UN MODE DE REALISATION DE L'INVENTION

Dans la description qui va suivre, des chiffres de référence identiques désignent des pièces identiques ou ayant des fonctions similaires.

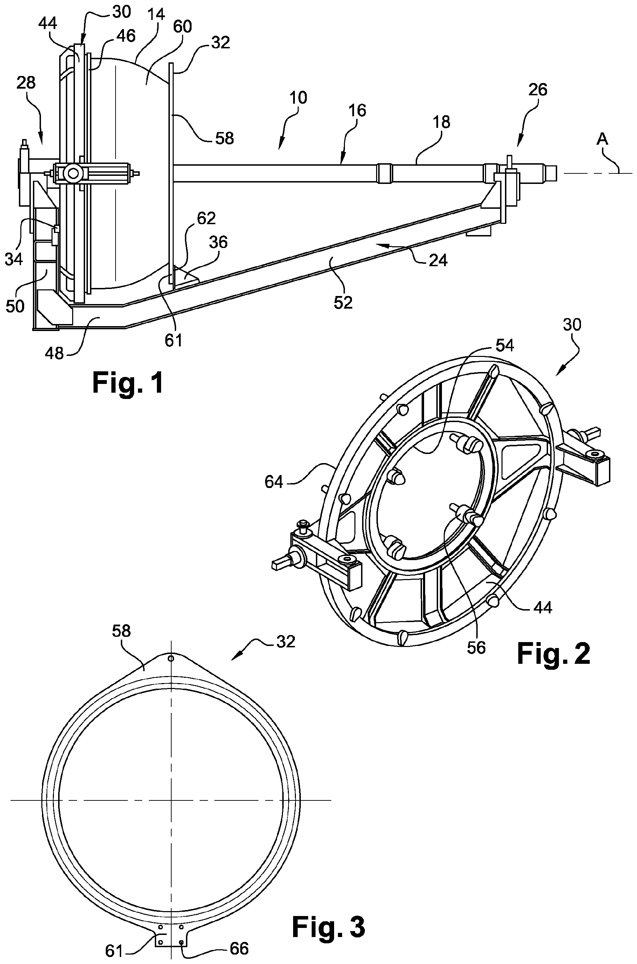

On a représenté sur les figures 1 à 14 un outillage pour l'équilibrage d'un module 10 de turbomachine dans une équilibreuse 12.

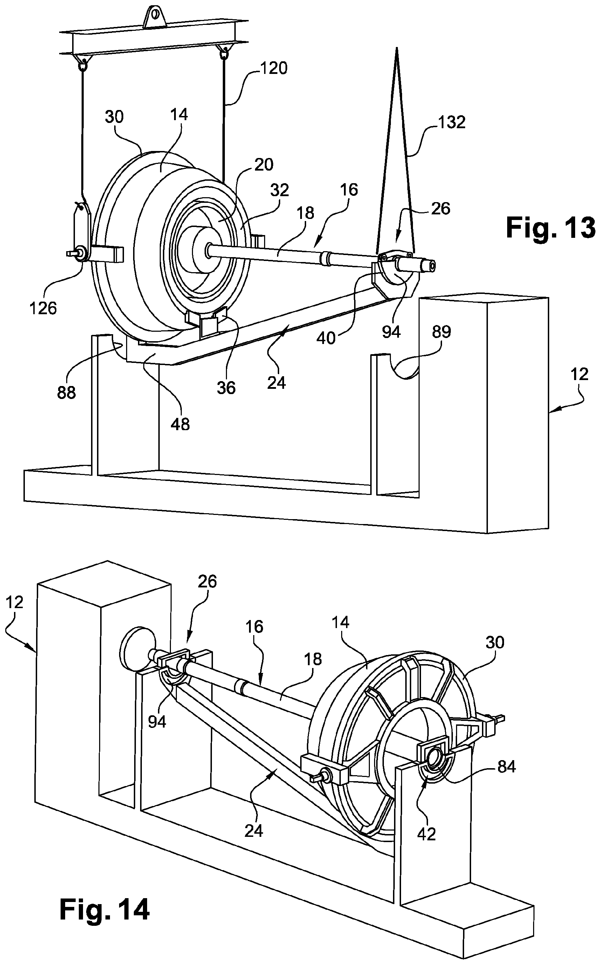

L'équilibreuse 12 a notamment été représentée de manière schématique aux figures 13 et 14.

De manière connue, un module 10 de turbomachine comporte au moins un carter de stator 14 et un rotor 16. Le rotor 16 comporte un arbre 18 d'axe longitudinal d'axe A et au moins un étage d'aubes 20 qui est relié à une partie d'extrémité longitudinale 22 dudit arbre de rotor 18 et qui est entouré par ledit carter de stator 14.

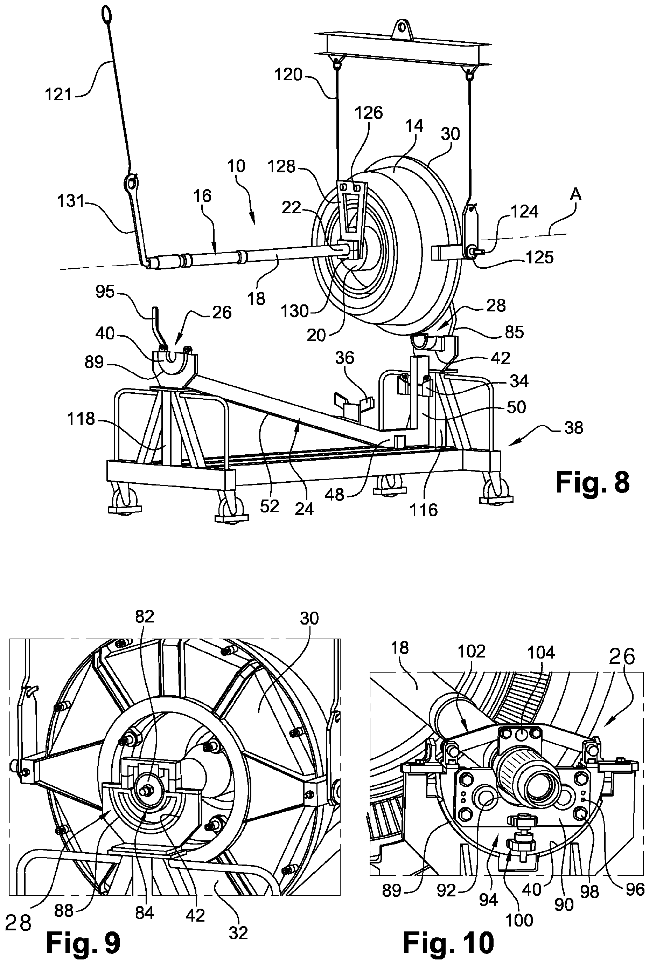

Cette configuration a été représentée en détail aux figures 1 et 8.

Conventionnellement, un tel module 10 est reçu directement dans l'équilibreuse 12, c'est-à-dire que l'arbre 18 et l'étage d'aubes 20 sont montés en rotation directement dans l'équilibreuse 12, et le carter de stator 14 est fixé directement à ladite équilibreuse 12.

Cette configuration donne globalement satisfaction dans le cadre de modules 10 de dimensions réduites ou moyennes, mais est particulièrement malaisée à mettre en oeuvre dans le cadre de modules 10 de grandes dimensions ou de masse élevée dont la manutention s'avère problématique.

L'invention remédie à cet inconvénient en proposant un outillage permettant l'installation de manière aisée et reproductible d'un tel module 10 dans une équilibreuse 12.

A cet effet, l'outillage comporte au moins un cadre d'équilibrage 24 qui est destiné à recevoir le module 10.

Le cadre d'équilibrage 24 comporte des paliers 26 et 28 qui sont configurés pour recevoir et pour guider respectivement l'arbre 18 et l'étage d'aubes 20 du rotor 16.

Conformément à l'invention, la position d'au moins un desdits paliers 26, 28 est réglable par rapport au cadre 24 pour permettre un ajustement du rotor 10 par rapport à l'équilibreuse 12, comme on le verra dans la suite de la présente description.

L'outillage comporte par ailleurs des premiers et deuxièmes moyens 30, 32 qui sont configurés pour être fixés au carter de stator 14.

L'outillage comporte par ailleurs des troisièmes et quatrièmes moyens 34, 36 qui sont prévus sur le cadre 24 et qui sont destinés à permettre la fixation des premiers moyens 30 et deuxièmes moyens 32 audit cadre 24.

Avantageusement, la position d'au moins un des troisièmes et quatrièmes moyens 34, 36 est réglable par rapport audit cadre 24.

L'outillage comporte également des cinquièmes moyens 38 de transport du cadre qui sont destinés à permettre d'acheminer le cadre 24 vers l'équilibreuse 12.

Une caractéristique essentielle de l'invention est que l'outillage comporte avantageusement des sixièmes moyens 40, 42 qui sont prévus sur la cadre 24 et qui sont configurés pour coopérer indifféremment avec l'équilibreuse 12 et avec les cinquièmes moyens 38 de transport du cadre 24 en vue de supporter ledit cadre 24 dans les cinquièmes moyens 38 de transport du cadre ou dans l'équilibreuse 12 de manière à permettre un transfert aisé du cadre 24 desdits cinquièmes moyens de transport 38 à ladite équilibreuse 12.

Les moyens susmentionnés vont à présent être décrits de manière plus explicite.

Conformément à l'invention, les premiers moyens 30 comportent, comme l'illustre la figure 2, un plateau annulaire 44 qui est fixé à une première extrémité 46 du carter 14 de stator, comme représenté à la figure 1.

Le plateau annulaire 44 est destiné à coopérer avec les troisièmes moyens 34 du cadre. Dans le mode de réalisation préféré de l'invention, le cadre 24 présente une forme ouverte en forme de trapèze et il comporte au moins une branche horizontale 48 qui est destinée à reposer sur les cinquièmes moyens de transport 38 et il comporte de part et d'autre de cette branche 48 deux branches, à savoir une branche verticale 50 et une branche inclinée 52.

Il sera compris que cette configuration n'est pas limitative de l'invention et que le cadre 24 pourrait présenter une autre forme ouverte, par exemple une forme ouverte en forme de U comportant de la même façon une branche horizontale 48 et deux branches verticales.

La branche verticale 50 comporte une patte de fixation 34 qui constitue les troisièmes moyens du cadre, sur laquelle est fixé le plateau annulaire 44 constituant le premier moyen fixé au carter de stator 14.

Par ailleurs, le plateau annulaire 44 permet non seulement de porter le carter de stator 14, mais également de brider le rotor 16 par rapport au carter 14 de stator.

A cet effet, un bord périphérique intérieur 54 du plateau annulaire comporte des moyens amovibles de blocage du rotor 16 par rapport au carter de stator 14, qui sont destinés à immobiliser le rotor 16 par rapport au carter de stator 14 pendant son transport vers l'équilibreuse 12.

Par exemple, ces septièmes moyens amovibles de blocage comportent des écrous excentriques 56 qui sont disposés angulairement de manière régulière autour du bord périphérique intérieur 54 du plateau annulaire 44, comme représenté à la figure 2, et qui sont destinés à s'étendre radialement vers l'intérieur au contact d'une portée (non représentée) de l'étage d'aubes 20 pour immobiliser ledit étage d'aubes 20 à l'intérieur du carter 14 de stator, et ce faisant, pour immobiliser en rotation le rotor 16 par rapport au carter de stator 14.

Les deuxièmes moyens 32 qui sont configurés pour être fixés au carter du stator 14 comportent une couronne 58 qui, comme l'illustre la figure 1, est destinée à être fixée au carter de stator 14 par une seconde extrémité 60 du carter de stator 14 et qui est destinée à coopérer avec les quatrièmes moyens 36 prévus sur le cadre 24.

Dans le mode de réalisation préféré de l'invention, les quatrièmes moyens 36 sont constitués d'une patte 36 qui est fixée sur la branche inclinée 52 du cadre 24, et qui est fixée à une partie inférieure 60 de la couronne 58 qui a été représentée à la figure 3, pour permettre à cette couronne 58 de prendre appui sur le bras incliné 52 du cadre.

Les deuxièmes moyens 32 et les quatrièmes moyens 36 permettent avantageusement de supporter le poids du carter de stator 14 qui, en leur absence, serait en porte-à-faux, de manière à permettre de maintenir celui-ci coaxial à l'arbre 18 du rotor 16 et d'éviter ainsi toute interférence entre ledit carter stator 14 et l'étage d'aubes 20.

Avantageusement, les quatrièmes moyens constitués de la patte 36 peuvent être réglés par rapport à la partie inférieure 60 de la couronne 58 de manière à permettre un réglage selon la direction verticale de ladite couronne 58. Cette configuration permet de régler la coaxialité du carter 14 et du rotor 16.

Cette configuration permet d'éviter que le carter 14 ne soit en porte-à-faux par rapport au bras vertical 50 du cadre 24, et que son poids ne tende à le désaligner du rotor 16.

On remarquera que, de manière connue, le plateau annulaire 44 comme la couronne 58 peuvent être fixés au carter de stator 14 par l'intermédiaire de vis et d'écrous. On aperçoit par exemple des écrous de fixation 64 agencés autour de la périphérie du plateau annulaire 44 sur la figure 2.

Par ailleurs, la patte de fixation 36 du bras incliné 52 du cadre 24 comporte des perçages qui sont destinés à être agencés en regard de perçages 66 de la partie inférieure de la couronne 58. Ces perçages sont destinés à être traversés avec jeu par des vis 62 de manière à permettre un déplacement relatif de la couronne 58 par rapport à la patte 36 puis de permettre son verrouillage. Ainsi les vis 62 constituent un moyen de réglage simple de la position verticale et transversale du carter de stator 14, ce qui permet de garantir la coaxialité dudit carter 14 de stator avec le rotor 16.

Pour assurer le guidage en rotation du rotor 16 dans le cadre 24, le cadre d'équilibrage 24 comporte à une première extrémité qui est agencée à proximité du carter 14 de stator, c'est-à-dire à l'extrémité du bras vertical 50, un premier palier de guidage à appui décalé 28.

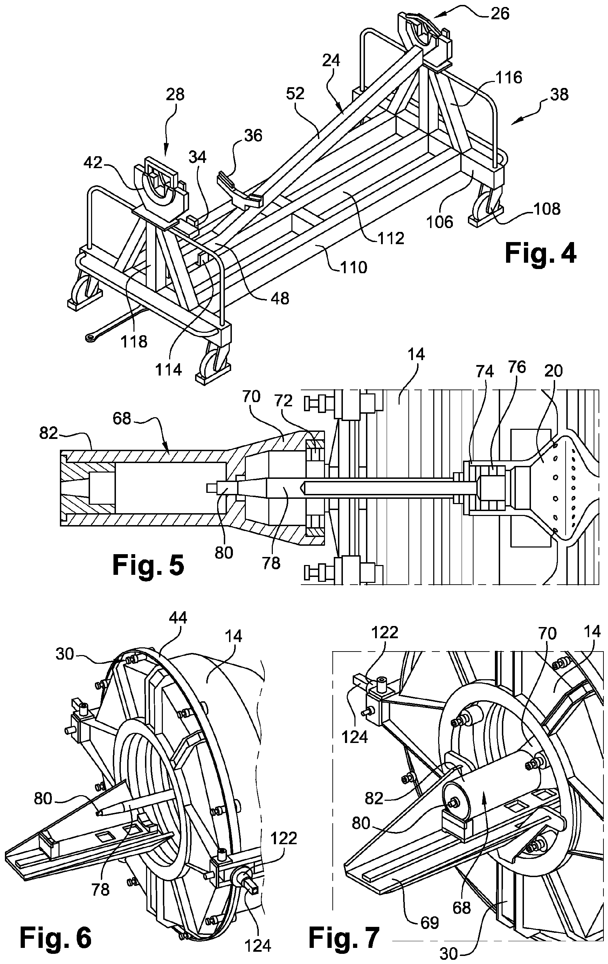

Le palier de guidage a appui décalé 28, aussi connu techniquement sous le nom de "faux palier", comporte pour l'essentiel, comme l'illustrent les figures 5 à 7, un élément tubulaire 68 qui comporte une première extrémité 70 qui est destinée à être introduite, comme l'illustre la figure 7, dans le carter 14 de stator. Cette extrémité 70 comporte au moins un palier 72 recevant en rotation l'étage d'aubes 20.

Plus particulièrement, l'étage d'aubes 20 comporte une portée d'extrémité 74 qui est montée en rotation à l'intérieur du palier 72 de l'élément tubulaire 70, mais également par l'intermédiaire d'un palier 76 qui est monté autour d'un arbre de support 78 qui est reçu à l'intérieur du carter 14 à l'intérieur de l'étage d'aubes 20 et dont une extrémité 80, qui fait saillie hors du carter 14, est reçue dans l'élément tubulaire 68. Ce montage permet d'assurer un guidage en rotation de l'étage d'aubes 20 radialement entre l'arbre de support 78 et l'élément tubulaire 68.

Une seconde extrémité 82 de l'élément tubulaire 68 est destinée à faire saillie hors du carter 14 de stator et elle comporte une portée périphérique qui, comme l'illustre la figure 9, est bridée sur un premier support 84 solidaire du cadre 24. La portée périphérique est décalée axialement du palier 76, puisque prenant appui à l'extérieur du carter de stator 14.

Pour le montage du palier de guidage décalé 28, on introduit donc d'abord l'arbre de support 78 dans le palier 76 de l'étage d'aubes 20, comme représenté à la figure 6, puis on introduit l'arbre de support dans l'élément tubulaire 68 que l'on fait glisser dans le carter de stator 84 au moyen d'une rampe de guidage 69, comme représenté à la figure 7.

L'élément tubulaire 68 peut alors être fixé au cadre 24.

Plus particulièrement, comme l'illustre la figure 9, le premier support 84 solidaire du cadre 24, qui reçoit la portée périphérique 82 de l'élément tubulaire 68 présente une section semi-cylindrique et il comporte une périphérie extérieure 42 qui forme les sixièmes moyens de support de cadre qui sont configurés pour coopérer indifféremment avec l'équilibreuse 12 ou avec les moyens de transport 38.

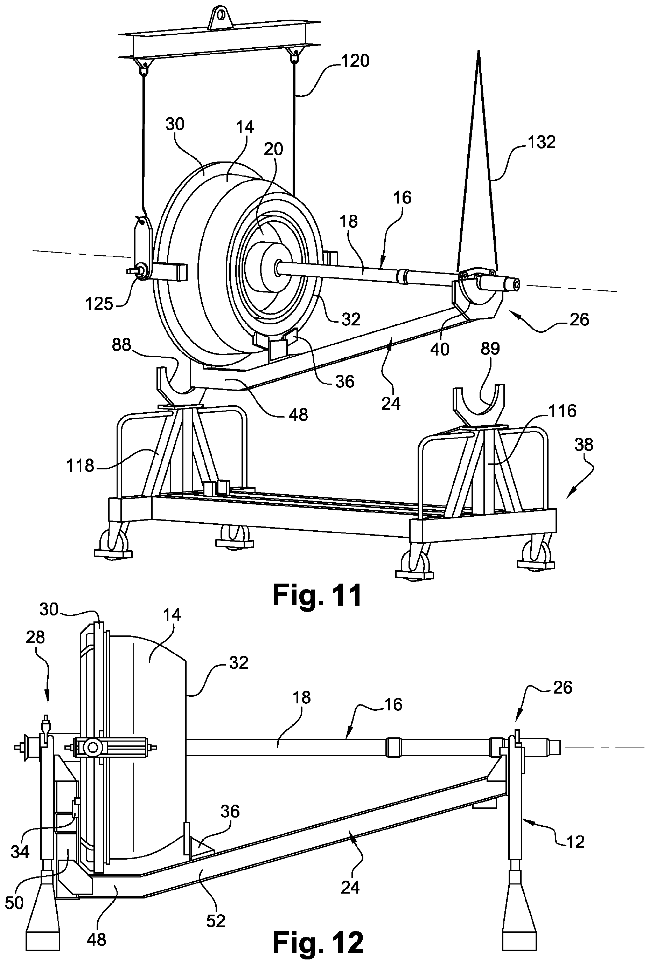

A cet effet, les moyens de transport 38 et l'équilibreuse 12 comportent des portées de réception 88 du premier support 84, complémentaires de la périphérie extérieure 42 du support 84, comme représenté aux figures 11 et 13.

Les moyens de transport 38 et l'équilibreuse 12 comportent par ailleurs des moyens de bridage 85 du premier support 84 de manière à permettre son immobilisation par rapport aux moyens de transport 38 ou à l'équilibreuse 12. Par exemple, sur la figure 8, le moyen de bridage 85 des moyens de transport 38 comporte un levier de verrouillage basculant transversalement.

Il sera toutefois compris que tout moyen connu de l'état de la technique peut convenir à la bonne mise en oeuvre de ces moyens de bridage.

A une seconde extrémité du cadre d'équilibrage 24, qui correspond à l'extrémité de sa branche inclinée 52, le cadre d'équilibrage 24 comporte un second palier de guidage à galets 26 qui comporte, comme l'illustre la figure 10, une platine 90 porteuse de deux galets 92 sur lesquels l'arbre 18 est destiné à rouler.

La platine 90 est portée par un second support 94 qui est solidaire du cadre 24. Des vis de serrage 98 sont agencées avec jeu entre la platine 90 et le second support 94 de manière à permettre une latitude de réglage de la platine 90 par rapport au second support 94.

Les vis 98 étant desserrées, la position de la platine 90 est susceptible d'être préalablement réglée transversalement et verticalement par rapport audit second support 94, puis d'être immobilisée définitivement dans une position réglée par rapport au second support 94. La platine 90, une fois réglée sur le second support 94, est percée en même temps que le second support 94, et verrouillée dans cette position par l'intermédiaire de pions 96 qui sont reçus dans les perçages traversant donc la platine 90 et le second support 94. Puis la platine 90 est verrouillée dans ladite position par l'intermédiaire des vis de serrage 98.

On définit ainsi la position de l'axe de l'arbre 18 par rapport au second support 94.

Avantageusement, un système de réglage par molette et vis sans fin 100 peut être agencé entre le second support 94 et la platine 90 pour régler verticalement la position de la platine 90 par rapport au second support 94.

L'arbre 18 peut être maintenu au contact des galets 92 de la platine 90 par l'intermédiaire d'une bride 102 transversale qui est fixée à ses extrémités opposées au support 94 et qui comporte un galet central dont on aperçoit l'axe 104 sur la figure 10. Le galet roule sur l'axe 18 et il permet donc de maintenir l'arbre 8 au contact des galets 92.

Comme on le verra dans la suite de la présente description, la possibilité du réglage vertical du second palier 28 permet de garantir le parallélisme de l'axe A du rotor 16 avec un axe B de l'équilibreuse de manière à éviter que l'étage d'aubes 20 ne présente pas de balourd du fait de son inclinaison.

De la même manière que précédemment, le second support 94 présente une section semi-cylindrique comportant une portée cylindrique 40 qui est destinée à être reçue dans des portées de réception semi-cylindrique complémentaire 89 des moyens de transport 38 et de l'équilibreuse 12.

De la même manière que pour le premier support 84, des moyens de bridage, tels qu'un levier 95 représenté à la figure 8, permettent l'immobilisation du second support dans lesdites portées de réception 89.

Comme l'illustre la figure 4, les cinquièmes moyens 38 de transport du cadre sont constitués de préférence d'un chariot de transport 38 apte à porter le cadre 24.

Pour l'essentiel, ce chariot 38 comporte deux poutres transversales 106 munies à leurs extrémités transversales de roulettes 108, et entre lesquelles est agencée une structure 110 sur laquelle la branche horizontale 48 du cadre 24 est susceptible de reposer.

Par exemple, cette structure 110 comporte une poutre centrale 112 qui comporte deux pattes verticales 114 destinées à immobiliser latéralement la branche horizontale 48 du cadre 24.

Le chariot 38 comporte deux potences verticales 116 à l'extrémité desquelles sont agencées les portées de réception semi-cylindriques 40, 42.

Pour permettre l'installation du module 16 dans le cadre 24, l'outillage comporte des huitièmes moyens de levage du module 16.

Ces moyens comportent des élingues 120 qui sont destinées à coopérer avec le plateau annulaire 44.

A cet effet, le plateau annulaire 44 comporte deux bras 122 horizontaux diamétralement opposés dont les extrémités sont conformées en portées 124 qui sont susceptibles d'être reçues dans des anneaux 125 agencés à l'extrémité des élingues 120.

En complément, les huitièmes moyens de levage du module 10 comporte une élingue 121 et un support 131 destiné à supporter l'extrémité de l'arbre 18 du rotor 16.

Les huitièmes moyens de levage comportent par ailleurs, comme l'illustre la figure 8, un support intermédiaire amovible 128 liant l'arbre 18 de rotor 16 au carter de stator, ledit support intermédiaire amovible 128 comportant par exemple une plaque qui est fixée dans sa partie supérieure au carter de stator 14 par l'intermédiaire de vis 126, et en dessous de laquelle s'étend une pince 130 enserrant l'arbre 18.

Comme l'illustre la figure 8, les huitièmes moyens de levage permettent de supporter le rotor 16 et le carter de stator 14 afin de les placer dans le cadre 24. Le support 128 peut être démonté après que le carter de stator 14 ait été fixé au cadre 24.

L'outillage comporte aussi des neuvièmes moyens de levage du cadre 24 qui sont destinés à permettre le levage du cadre 24 une fois qu'il est équipé du rotor 16.

Comme l'illustre la figure 11, ces neuvièmes moyens de levage comportent les élingues 120 dont les anneaux 125 sont destinés à coopérer avec les bras horizontaux diamétralement opposés 124 du support, mais également des élingues 132 destinées à être fixées au second support 94 pour permettre le levage du cadre 24 par l'extrémité de sa branche inclinée 52.

L'ensemble de l'outillage précédemment décrit permet d'équilibrer un module 16 de turbomachine selon un procédé reproductible de manière répétitive pour des rotors 16 successifs.

On installe préalablement dans le chariot 38 le cadre 24 qui repose sur ledit chariot par l'intermédiaire de sa branche horizontale 48, de sa branche verticale 50, et de sa branche inclinée 52 qui reposent respectivement sur les portées semi-cylindriques 88 et 89 des potences 118 et 116 du chariot 38.

Le procédé comporte une première étape de levage et de mise en place, à l'aide des huitièmes moyens de levage, comme représenté à la figure 8, d'un module 10 dans un cadre 24. Une fois installé, on bride le rotor 16 par rapport au cadre 44 du carter 14 à l'aide des écrous excentriques 56.

Puis, au cours d'une deuxième étape de transport du module équipé de son cadre 24, on achemine ledit module 10 équipé de son cadre 24 vers l'équilibreuse 12 à l'aide du chariot 38, de manière à placer le chariot 38 à proximité immédiate de l'équilibreuse 12.

Il s'ensuit alors une troisième étape de levage et de transfert du module 10, équipé du cadre 24, dans l'équilibreuse 12 à l'aide des neuvièmes moyens de levage précédemment décrits.

Dans ce cas, c'est l'ensemble du module 10 et du cadre 24 qui sont transférés vers l'équilibreuse 12.

De la même manière que précédemment, le cadre repose alors sur les portées semi-cylindriques 88 et 89 de l'équilibreuse 12. On peut alors débrider le rotor 16.

Enfin, le procédé comporte une quatrième étape d'équilibrage du module 10 dans l'équilibreuse 12.

Il convient de noter qu'un tel équilibrage est toutefois possible que sous réserve que l'axe A du rotor 16 soit, d'une part, coaxial avec les paliers 26 et 28 du cadre 24 et, d'autre part, que l'axe A du rotor 16 soit parallèle à l'axe B de l'équilibreuse 12, faute de quoi l'inclinaison du module 10 provoquera l'apparition d'un balourd qui faussera la lecture de l'équilibreuse.

Il est donc nécessaire de régler le cadre 24 et l'équilibreuse 12 préalablement aux opérations d'équilibrage.

En effet, le cadre 24 étant une structure ouverte, la masse du module 10 tend à ouvrir cette structure et notamment à écarter l'une de l'autre la branche verticale 50 et la branche inclinée 52, de sorte que la coaxialité initiale des paliers 26, 28 est modifiée par l'implantation du module 10 dans le cadre 24.

Pour parer à cet inconvénient, l'invention propose un ensemble d'étalonnage 10' permettant le réglage de l'outillage.

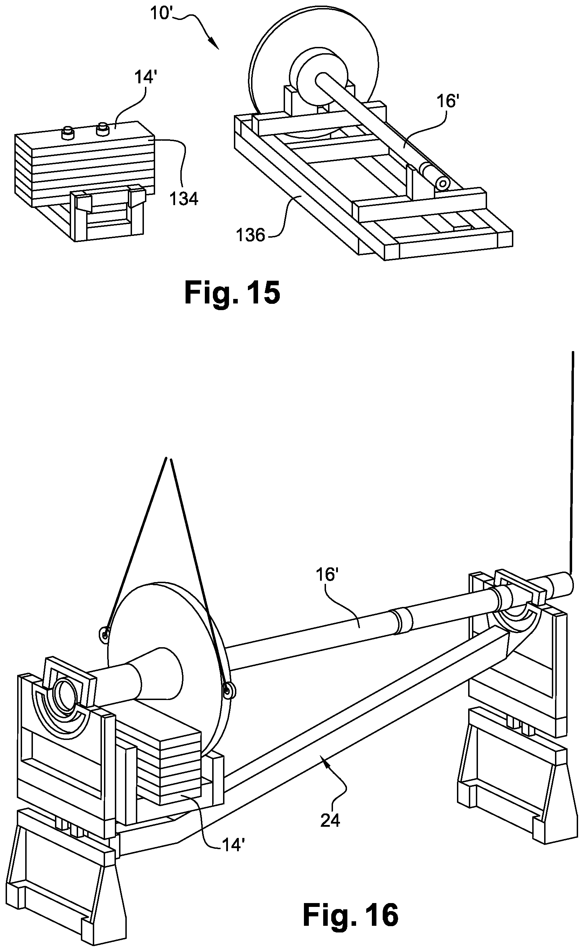

Cet ensemble d'étalonnage comporte, comme l'illustre la figure 15, un carter 14' de stator étalon qui est constitué d'un empilement de gueuses 134 de masse équivalente à celle du carter de stator 14 devant être équilibré et qui est destinée à être positionnée, comme l'illustre la figure 16, au point d'application du poids du carter de stator 14 du module 10 réel.

L'ensemble d'étalonnage comporte par ailleurs un rotor étalon équilibré 16', qui a été représenté à la figure 15 dans une position de stockage sur un support 136 destiné à permettre son stockage lorsqu'il n'est pas utilisé. Ce rotor étalon 16' présente un moment d'inertie et un balourd correspondant au rotor 16 du module à équilibrer.

Pour procéder à l'étalonnage du cadre 24, on procède de la manière suivante.

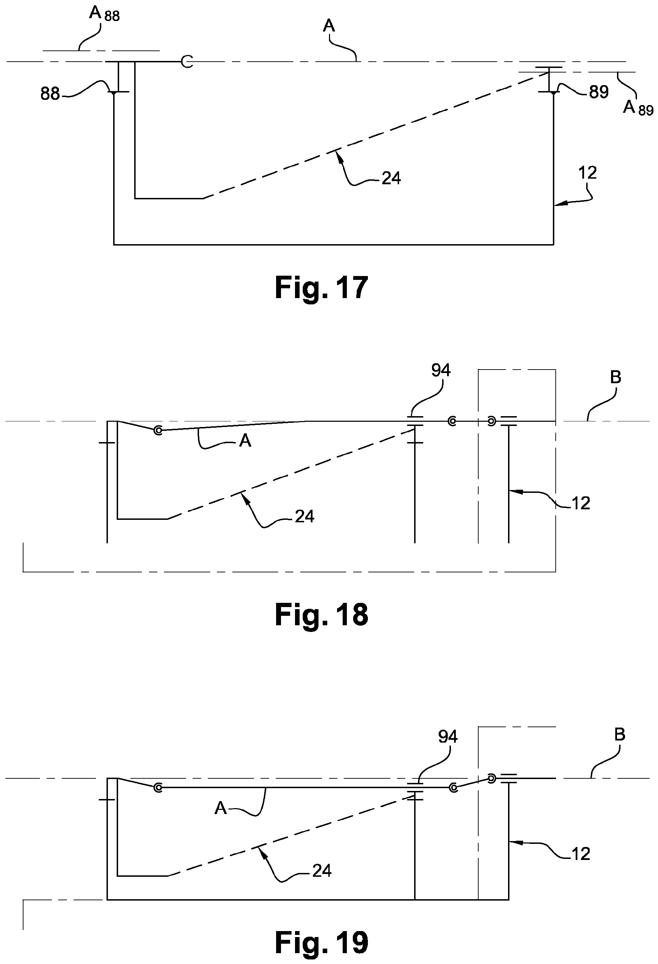

On procède en premier lieu à une première étape de réglage statique de l'équilibreuse au cours de laquelle on opère un réglage de la coaxialité des portées semi-cylindriques 88, 89 de l'équilibreuse de manière qu'elles soient coaxiales comme représenté à la figure 17. On ajuste ainsi les axes A₈₈ et A₈₉ des portées semi-cylindriques de manière qu'ils ne forment plus qu'un même axe A.

De la sorte, l'équilibreuse est apte à recevoir les premier et second supports 84, 94 du cadre 24 selon une configuration de coaxialité correspondant à la configuration réelle du rotor 16 à équilibrer.

Tout moyen connu de la technique peut être utilisé pour la vérification de cette coaxialité.

Puis, comme l'illustre la figure 16, on dispose, dans le cadre 24, le carter de stator étalon 14' et le rotor étalon 16' de manière à provoquer un écartement de la branche 50 et de la branche 52 du cadre 24, le cadre étant alors dans une configuration de charge correspondant à celle de l'équilibrage.

Puis, au cours d'une troisième étape, on transfère le cadre 24 équipé du rotor étalon 16' et du carter 14' de stator étalon sur les portées semi-cylindriques 88, 89 de l'équilibreuse 12.

Le réglage effectué au cours de la première étape de réglage statique de l'équilibreuse permet de garantir que les portées semi-cylindriques de l'équilibreuse 12 accueillent les supports 84, 94 du cadre 24 selon un alignement satisfaisant.

Il est alors nécessaire d'effectuer une quatrième étape de réglage dynamique sur l'équilibreuse au cours de laquelle on ajuste la position verticale des galets 92 de la platine 90, en réglant la position de la platine 90 par rapport au second support 94, de manière à passer d'une position d'inclinaison non contrôlée de l'axe A du rotor 16', comme représenté à la figure 18 dans lequel l'axe A du rotor 16' forme un angle non déterminé avec l'axe B de l'équilibreuse 12, à une position réglée dans laquelle l'axe A du rotor étalon 16' est parallèle à l'axe B de l'équilibreuse. Le parallélisme de ces axes A, B permet d'éviter que le rotor 16 ne présente un balourd préjudiciable à une mesure satisfaisante.

Il convient alors de conserver ce réglage en perçant la platine 90 et le support 94 et en y insérant les piges 96 de manière à maintenir cette position, puis, on serre les vis 98 de manière à immobiliser définitivement la platine 90 par rapport au second support 94.

Il est donc dès lors possible d'ôter de l'équilibreuse 12 le cadre 24 qui est à présent réglé dans une position définitive. On démonte alors le rotor étalon 16' et le carter étalon 14' du cadre 24, le cadre 24 étant alors prêt à recevoir un module 10 réel comportant un rotor 16 et un carter de stator 14 pour son équilibrage.

Avantageusement, le cadre 24 et l'équilibreuse 12 étant réglés une fois pour toutes pour tous les rotors 16 du même type, cette configuration offre un gain de temps important dans le cadre de l'équilibrage d'une série de rotors 16 identiques, car les réglages permettent la reproductibilité de l'opération d'équilibrage sans réglage intermédiaire.

## Revendications

1. Outillage pour l'équilibrage d'un module (10) de turbomachine dans une équilibreuse (12), ce module comportant au moins un carter de stator (14) et un rotor (16) comportant un arbre (18) d'axe longitudinal A et au moins un étage d'aubes (20) qui est relié à une partie d'extrémité (22) longitudinale dudit arbre (18) et qui est entouré par ledit carter (14) du stator, ledit outillage comporte au moins :
- un cadre d'équilibrage (24), comportant deux paliers configurés (26, 28) pour recevoir et guider l'arbre (18) et l'étage d'aubes (20) du rotor (16),
- des premiers et deuxièmes moyens (30, 32) configurés pour être fixés audit carter (14) de stator,
- des troisièmes et quatrièmes moyens (34, 36) prévus sur ledit cadre (24), pour fixer respectivement lesdits premiers et deuxièmes moyens (30, 32) audit cadre,
- des cinquièmes moyens (38) de transport du cadre (24),
**caractérisé en ce que**:
- la position d'au moins un desdits paliers (26, 28) est réglable par rapport audit cadre (24),
- la position d'au moins un desdits troisièmes et quatrièmes moyens (34, 36) est réglable par rapport audit cadre (24), et **en ce que** ledit outillage comporte aussi
- des sixièmes moyens de support du cadre (84, 94) comportant un premier et un second support, prévus sur ledit cadre (24) et configurés pour coopérer indifféremment avec l'équilibreuse (12) et avec les cinquièmes moyens de transport (38) du cadre (24), en vue du support dudit cadre (24) dans lesdits cinquièmes moyens de transport (38) et dans ladite équilibreuse (12).

2. Outillage selon la revendication précédente, **caractérisé en ce qu'**il comporte des septièmes moyens (56) amovibles de blocage du rotor (16) par rapport au carter de stator (14), destinés à immobiliser le rotor (16) par rapport au carter de stator (14) pendant son transport vers l'équilibreuse (16).

3. Outillage selon la revendication précédente, **caractérisé en ce que** lesdits premiers moyens comportent un plateau annulaire (44), qui est configuré pour être fixé à une première extrémité (46) du carter de stator (14), qui est destiné à coopérer avec les troisièmes moyens (34) du cadre (24), et dont un bord périphérique intérieur (54) comporte les septièmes moyens amovibles (56) de blocage du rotor (16).

4. Outillage selon la revendication précédente, **caractérisé en ce que** lesdits deuxièmes moyens (32) comportent une couronne (58), qui est configurée pour être fixée à une seconde extrémité opposée (60) du carter de stator (14), qui est destinée à coopérer avec les troisièmes moyens (36) du cadre (24), et qui comporte un moyen de réglage de la position verticale et transversale du carter de stator (14).

5. Outillage selon l'une des revendications 1 à 4, **caractérisé en ce que** le cadre d'équilibrage (24) comporte à une première extrémité, à proximité du carter de stator (14), le premier palier de guidage à appui décalé (28), qui comporte un élément tubulaire (68) dont une première extrémité (70), destinée à être introduite dans le carter de stator (14), comporte au moins un palier (72) recevant en rotation un arbre de support (78) reçu dans l'étage d'aubes (20), et dont une seconde extrémité opposée (82), destinée à faire saillie hors du carter de stator (14), comporte au moins une portée périphérique (42) qui est bridée sur le premier support (84) des sixièmes moyens de support, solidaire du cadre (24).

6. Outillage selon la revendication précédente, **caractérisé en ce que** le cadre d'équilibrage (24) comporte à une seconde extrémité le second palier de guidage à galets (26) qui comporte une platine (90) porteuse de deux galets (92) sur lesquels l'arbre (18) est destiné à rouler, ladite platine étant portée par le second support (94) des sixièmes moyens de support, solidaire du cadre (24), et la position de ladite platine (90) étant susceptible d'être réglée transversalement et verticalement par rapport audit second support (94), puis immobilisée définitivement dans une position réglée par l'intermédiaire de pions (96) traversant le platine (90) et ledit second support (94), et verrouillée dans ladite position par l'intermédiaire de vis de serrage (98) agencées avec jeu entre la platine (90) et le second support (94).

7. Outillage selon l'une des revendications précédentes, **caractérisé en ce que** les cinquièmes moyens de transport (38) du cadre (24) comportent un chariot de transport (38) apte à porter le cadre (24).

8. Outillage selon la revendication précédente prise en combinaison avec les revendications 5 et 6, **caractérisé en ce que** les premier et second supports (84, 94) présentent une section semi-cylindrique et **en ce que** le chariot de transport (38) et l'équilibreuse (12) comportent des portées de réception (88, 89) semi-cylindriques et réglables transversalement et verticalement, complémentaires desdits premier et second supports (84, 94), et des moyens de bridage desdits premier et second supports (84, 94) qui forment les sixièmes moyens de support de cadre, dans lesdites portées de réception (88, 89).

9. Outillage selon l'une des revendications 3 à 8, **caractérisé en ce qu'**il comporte des huitièmes moyens de levage du module, comportant des élingues (120, 121) destinées à coopérer avec le plateau annulaire (44) et avec un support d'extrémité (131) de l'arbre (18) du rotor (16) et qui sont aptes à permettre le levage du module (10), et un support intermédiaire amovible (128) liant l'arbre (18) de rotor (16) au carter de stator (14).

10. Outillage selon les revendications 3 et 6 prises en combinaison, **caractérisé en ce qu'**il comporte des neuvièmes moyens de levage du cadre comportant des élingues (120, 132) destinées à coopérer avec le plateau annulaire (44) et avec le second support (94), et qui sont aptes à permettre le levage du cadre (24) .

11. Outillage selon la revendication 7 ou 8, **caractérisé en ce que** le cadre (24) présente une forme ouverte en trapèze ou en U et **en ce qu'**il comporte au moins une branche horizontale (48) apte à reposer sur le chariot (38) et deux branches (50, 52), notamment au moins une branche verticale (50), dont les extrémités portent les paliers (26, 28) du cadre (24).

12. Procédé de réglage avant équilibrage d'une équilibreuse (12) et d'un outillage selon la revendication 11, **caractérisé en ce qu'**il est mis en oeuvre à l'aide d'un ensemble d'étalonnage (10') comportant :
- un carter de stator étalon (14'), constitué d'un empilement de gueuses (134) de masse correspondante à celle du stator (14) du module (10), et qui est destiné à reposer sur le cadre (24) selon une position correspondant sensiblement au point d'application du poids du carter de stator (14) du module (10), et
- un rotor étalon équilibré (16'), de moment d'inertie et de balourd correspondant sensiblement au rotor du module (16) à équilibrer.
et **en ce qu'**il comporte :
- une première étape de réglage statique de l'équilibreuse (12), au cours de laquelle on règle les portées de réception semi-cylindriques (88, 89) de l'équilibreuse de manière qu'elles soient coaxiales,
- une deuxième étape au cours de laquelle on installe le rotor étalon (16') et le carter de stator étalon (14') dans le cadre (24),
- une troisième étape, au cours de laquelle on transfère le cadre (24) équipé du rotor étalon (16') et du carter (14') de stator étalon sur les portées de réception semi-cylindriques de l'équilibreuse,
- une quatrième étape de réglage dynamique sur l'équilibreuse au cours de laquelle on ajuste la position verticale des galets (92) en ajustant la platine (90) par rapport au second support (94), de manière que les axes A de paliers soient parallèles à un axe B d'un arbre d'entraînement de l'équilibreuse (12) puis on perce la platine (90) et le second support (94) et on insère des piges (96) dans les perçages effectués afin de définir la position de la platine (90), et enfin on verrouille la platine (90) par rapport au second support (94).

13. Procédé d'équilibrage d'un module (10) de turbomachine dans une équilibreuse (12), **caractérisé en ce qu'**il comporte :
- une première étape de levage et de mise en place, à l'aide des huitièmes moyens de levage, d'un module (10) dans un cadre (24) reçu dans les cinquièmes moyens de transport (38) d'un outillage selon les revendications 1 à 11,
- une deuxième étape de transport du module (38) équipé du cadre (24) vers l'équilibreuse (12), à l'aide des cinquièmes moyens (35) de transport,
- une troisième étape de levage et de transfert du module (10) équipé du cadre (24) dans l'équilibreuse (12) à l'aide des neuvièmes moyens de levage, et
- une quatrième étape d'équilibrage du module (10) dans l'équilibreuse (12).

## Patentansprüche

1. Werkzeug zum Auswuchten eines Turbomaschinenmoduls (10) in einer Auswuchtvorrichtung (12), wobei dieses Modul mindestens ein Statorgehäuse (14) und einen Rotor (16) aufweist, der eine Welle (18) der Längsachse A und mindestens eine Schaufelstufe (20) aufweist, die mit einem Längsendabschnitt (22) der Welle (18) verbunden ist und von dem Statorgehäuse (14) umgeben ist, wobei das Werkzeug mindestens Folgendes aufweist:
- einen Auswuchtrahmen (24), der zwei Lager (26, 28) aufweist, die zur Aufnahme und Führung der Welle (18) und der Schaufelstufe (20) des Rotors (16) konfiguriert sind,
- erste und zweite Mittel (30, 32), die konfiguriert sind, um an dem Statorgehäuse (14) befestigt zu werden,
- dritte und vierte Mittel (34, 36), die auf dem Rahmen (24) vorgesehen sind, um die ersten und zweiten Mittel (30, 32) jeweils an dem Rahmen zu befestigen,
- fünfte Mittel (38) zum Transportieren des Rahmens (24), **dadurch gekennzeichnet, dass**:
- die Position mindestens eines der Lager (26, 28) in Bezug auf den Rahmen (24) einstellbar ist,
- die Position mindestens eines der dritten und vierten Mittel (34, 36) in Bezug auf den Rahmen (24) einstellbar ist, und dadurch, dass das Werkzeug auch Folgendes aufweist
- sechste Rahmenstützmittel (84, 94), die einen ersten und einen zweiten Träger aufweisen, die auf dem Rahmen (24) vorgesehen und konfiguriert sind, um unterschiedslos mit der Auswuchtvorrichtung (12) und mit den fünften Transportmitteln (38) des Rahmens (24) zusammenzuwirken, um den Rahmen (24) in den fünften Transportmitteln (38) und in der Auswuchtvorrichtung (12) zu stützen.

2. Werkzeug nach dem vorstehenden Anspruch, **dadurch gekennzeichnet, dass** es siebte abnehmbare Mittel (56) zum Sperren des Rotors (16) in Bezug auf das Statorgehäuse (14) aufweist, die dazu bestimmt sind, den Rotor (16) in Bezug auf das Statorgehäuse (14) während seines Transports zur Auswuchtvorrichtung (16) festzustellen.

3. Werkzeug nach dem vorstehenden Anspruch, **dadurch gekennzeichnet, dass** die ersten Mittel eine ringförmige Scheibe (44) aufweisen, die konfiguriert ist, um an einem ersten Ende (46) des Statorgehäuses (14) befestigt zu werden, die dazu bestimmt ist, mit den dritten Mitteln (34) des Rahmens (24) zusammenzuwirken, und von der ein peripherer Innenrand (54) die siebten abnehmbaren Mittel (56) zum Sperren des Rotors (16) aufweist.

4. Werkzeug nach dem vorstehenden Anspruch, **dadurch gekennzeichnet, dass** die zweiten Mittel (32) eine Krone (58) aufweisen, die konfiguriert ist, um an einem gegenüberliegenden zweiten Ende (60) des Statorgehäuses (14) befestigt zu werden, die dazu bestimmt ist, mit den dritten Mitteln (36) des Rahmens (24) zusammenzuwirken, und die ein Mittel zum Einstellen der vertikalen und transversalen Position des Statorgehäuses (14) aufweist.

5. Werkzeug nach einem der Ansprüche 1 bis 4, **dadurch gekennzeichnet, dass** der Auswuchtrahmen (24) an einem ersten Ende in der Nähe des Statorgehäuses (14) das erste Führungslager mit versetzter Auflage (28) aufweist, das ein rohrförmiges Element (68) aufweist, von dem ein erstes Ende (70) zum Einführen in das Statorgehäuse (14) bestimmt ist, mindestens ein Lager (72) aufweist, das drehbar eine in der Schaufelstufe (20) aufgenommene Stützwelle (78) aufnimmt, und von dem ein gegenüberliegendes zweites Ende (82), das dazu bestimmt ist, aus dem Statorgehäuse (14) herauszuragen, mindestens einen periphere Anschlag (42) aufweist, der auf dem ersten Träger (84) der sechsten Stützmittel, mit dem Rahmen (24) fest verbunden, angeflanscht ist.

6. Werkzeug nach dem vorstehenden Anspruch, **dadurch gekennzeichnet, dass** der Auswuchtrahmen (24) an einem zweiten Ende das zweite Führungslager mit Rollen (26) aufweist, das eine Platte (90) aufweist, die zwei Rollen (92) trägt, auf denen die Welle (18) zum Rollen bestimmt ist, wobei die Platte von dem zweiten Träger (94) der sechsten Stützmittel, mit dem Rahmen (24) fest verbunden, getragen wird, und wobei die Position der Platte (90) transversal und vertikal in Bezug auf den zweiten Träger (94) einstellbar ist, dann in einer mittels Stiften (96), die durch die Platte (90) und den zweiten Träger (94) hindurchgehen, eingestellten Position, dauerhaft festgestellt und in der Position mittels Klemmschrauben (98) verriegelt ist, die mit Spielraum zwischen der Platte (90) und dem zweiten Träger (94) angeordnet sind.

7. Werkzeug nach einem der vorstehenden Ansprüche, **dadurch gekennzeichnet, dass** die fünften Transportmittel (38) des Rahmens (24) einen Transportwagen (38) aufweisen, der in der Lage ist, den Rahmen (24) zu tragen.

8. Werkzeug nach dem vorstehenden Anspruch in Kombination mit den Ansprüchen 5 und 6, **dadurch gekennzeichnet, dass** der erste und zweite Träger (84, 94) einen halbzylindrischen Querschnitt aufweist und dadurch, dass der Transportwagen (38) und die Auswuchtvorrichtung (12) halbzylindrische und transversal und vertikal einstellbare Aufnahmeanschläge (88, 89) aufweisen, die komplementär zu dem ersten und zweiten Träger (84, 94) sind, und Flanschmittel des ersten und zweiten Trägers (84, 94), die die sechsten Rahmenstützmittel in den Aufnahmeanschlägen (88, 89) bilden.

9. Werkzeug nach einem der Ansprüche 3 bis 8, **dadurch gekennzeichnet, dass** es achte Modulhebemittel aufweist, die Schlingen (120, 121) aufweisen, die dazu bestimmt sind, mit der ringförmigen Scheibe (44) und mit einem Endträger (131) der Welle (18) des Rotors (16) zusammenzuwirken und die in der Lage sind, das Heben des Moduls (10) zu ermöglichen, und einen abnehmbaren Zwischenträger (128), der die Welle (18) des Rotors (16) mit dem Statorgehäuse (14) verbindet.

10. Werkzeug nach Ansprüchen 3 und 6 in Kombination, **dadurch gekennzeichnet, dass** es neunte Rahmenhebemittel aufweist, die Schlingen (120, 132) aufweisen, die dazu bestimmt sind, mit der ringförmigen Scheibe (44) und mit dem zweiten Träger (94) zusammenzuwirken, und die in der Lage sind, das Heben des Rahmens (24) zu ermöglichen.

11. Werkzeug nach Anspruch 7 oder 8, **dadurch gekennzeichnet, dass** der Rahmen (24) eine offene Trapez- oder U-förmige Form aufweist und dadurch, dass er mindestens einen horizontalen Schenkel (48), der in der Lage ist, auf dem Wagen (38) aufzuliegen, und zwei Schenkel (50, 52), insbesondere mindestens einen vertikalen Schenkel (50), aufweist, von denen die Enden die Lager (26, 28) des Rahmens (24) tragen.

12. Verfahren zum Einstellen einer Auswuchtvorrichtung (12) und eines Werkzeugs nach Anspruch 11 vor dem Auswuchten, **dadurch gekennzeichnet, dass** es mithilfe einer Kalibrieranordnung (10') durchgeführt wird, die Folgendes aufweist:
- ein Kalibrierstatorgehäuse (14'), das aus einem Stapel von Masseln (134) mit einer dem des Stators (14) des Moduls (10) entsprechenden Masse besteht, und das dazu bestimmt ist, auf dem Rahmen (24) gemäß einer Position aufzuliegen, die im Wesentlichen dem Anwendungspunkt des Gewichts des Statorgehäuses (14) des Moduls (10) entspricht, und
- einen ausgewuchteten Kalibrierrotor (16'), wobei das Trägheitsmoment und die Unwucht im Wesentlichen dem auszuwuchtenden Rotor des Moduls (16) entsprechen.
und dadurch, dass es Folgendes aufweist:
- einen ersten Schritt der statischen Einstellung der Auswuchtvorrichtung (12), bei dem die halbzylindrischen Aufnahmeanschläge (88, 89) der Auswuchtvorrichtung so eingestellt werden, dass sie koaxial sind,
- einen zweiten Schritt, bei dem der Kalibrierrotor (16') und das Kalibrierstatorgehäuse (14') in den Rahmen (24) eingebaut werden,
- einen dritten Schritt, bei dem der mit dem Kalibrierrotor (16') und dem Kalibrierstatorgehäuse (14') ausgestattete Rahmen (24) auf die halbzylindrischen Aufnahmeanschläge der Auswuchtvorrichtung übertragen wird,
- einen vierten Schritt der dynamischen Einstellung auf der Auswuchtvorrichtung, bei dem die vertikale Position der Rollen (92) durch Anpassen der Platte (90) in Bezug auf den zweiten Träger (94) angepasst wird, sodass die Lagerachsen A parallel zu einer Achse B einer Antriebswelle der Auswuchtvorrichtung (12) sind, dann werden die Platte (90) und der zweite Träger (94) durchbohrt und Stifte (96) in die Bohrungen eingeführt, die zum Festlegen der Position der Platte (90) ausgeführt wurden, und schließlich wird die Platte (90) in Bezug auf den zweiten Träger (94) verriegelt.

13. Verfahren zum Auswuchten eines Turbomaschinenmoduls (10) in einer Auswuchtvorrichtung (12), **dadurch gekennzeichnet, dass** es Folgendes aufweist:
- einen ersten Schritt des Hebens und des Einsetzens eines Moduls (10) mithilfe der achten Hebemittel in einen in den fünften Transportmitteln (38) eines Werkzeugs nach Ansprüchen 1 bis 11 aufgenommenen Rahmen (24),
- einen zweiten Transportschritt des mit dem Rahmen (24) ausgestatteten Moduls (38) zu der Auswuchtvorrichtung (12) mithilfe der fünften Transportmittel (35),
- einen dritten Schritt des Hebens und Übertragens des mit dem Rahmen (24) ausgestatteten Moduls (10) in die Auswuchtvorrichtung (12) mithilfe der neunten Hebemittel, und
- einen vierten Auswuchtungsschritt des Moduls (10) in der Auswuchtvorrichtung (12).

## Claims

1. Tooling for balancing a turbine engine module (10) in a balancing machine (12), said module having at least one stator housing (14) and a rotor (16) having a shaft (18) with a longitudinal axis A and at least one blade stage (20) which is connected to a longitudinal end portion (22) of said shaft (18) and which is surrounded by said stator housing (14), said tooling having at least:
- a balancing frame (24), having bearings (26, 28) designed to receive and to guide the shaft (18) and blade stage (20) of the rotor (16),
- first and second means (30, 32) designed to be attached to said stator housing (14);
- third and fourth means (34, 36) provided on said frame (24), to attach said first and second means (30, 32), respectively, to said frame,
- fifth means (38) for transporting the frame (24);
**characterized in that**:
- the position of at least one of said bearings (28) is adjustable relative to said frame (24);
- the position of at least one of said third and fourth means (34, 36) is adjustable relative to said frame ;
and **in that** said tooling also comprises sixth means (84, 94) for supporting the frame, comprising a first and second support provided on said frame (24) and designed to cooperate equally well with the balancing machine (12) and with the fifth means (38) for transporting the frame (24), in order to support said frame (24) in said fifth means (38) for transport and in said balancing machine (12).

2. Tooling according to the preceding claim, **characterised in that** it has seventh removable means (56) for locking the rotor (16) relative to the stator housing (14), said means being intended to immobilise the rotor (16) relative to the stator housing (14) while it is being transported to the balancing machine (16).

3. Tooling according to the preceding claim, **characterised in that** said first means have an annular plate (44), which is designed to be attached to a first end (46) of the stator housing (14), which is intended to cooperate with the third means (34) of the frame (24), and an inner peripheral edge (54) of which has the seventh removable means (56) for locking the rotor (16).

4. Tooling according to the preceding claim, **characterised in that** said second means (32) have a ring (58), which is designed to be attached to a second opposite end (60) of the stator housing (14), which is intended to cooperate with the third means (36) of the frame (24), and which has a means for adjusting the vertical and transverse position of the stator housing (14).

5. Tooling according to any of claims 1 to 4, **characterised in that** the balancing frame (24) has, at a first end near the stator housing (14), the first offset support guide bearing (28), which has a tubular element (68) of which a first end (70), intended to be introduced into the stator housing (14), has at least one bearing (72) for rotatably receiving a support shaft (78) received in the blade stage (20), and of which a second opposite end (82), intended to project outside the stator housing (14), has at least one peripheral bearing surface (42) which is clamped to the first support (84) of the sixth means that is rigidly connected to the frame (24).

6. Tooling according to the preceding claim, **characterised in that** the balancing frame (24) has, at a second end, the second guide bearing (26) with rollers that has a plate (90) carrying two rollers (92) on which the shaft (18) is intended to roll, said plate being carried by the second support (94) of the sixth means that is rigidly connected to the frame (24), and the position of said plate (90) being capable of being adjusted transversely and vertically relative to said second support (94), then immobilised definitively in an adjusted position by means of pins (96) traversing the plate (90) and said second support (94), and locked in said position by means of clamping screws (98) arranged with clearance between the plate (90) and the second support (94).

7. Tooling according to any of the preceding claims, **characterised in that** the fifth means (38) for transporting the frame (24) have a trolley (38) capable of carrying the frame (24).

8. Tooling according to the preceding claim taken in combination with claims 5 and 6, **characterised in that** the first and second supports (84, 94) have a semi-cylindrical cross section and **in that** the transport trolley (38) and the balancing machine (12) have semi-cylindrical receiving bearing surfaces (88, 89) that are adjustable transversely and vertically and are complementary to said first and second supports (84, 94), and means for clamping said first and second supports (84, 94) which form the sixth means for supporting the frame, in said receiving surfaces (88, 89).

9. Tooling according to any of claims 3 to 8, **characterised in that** it has eighth means for lifting the module, having slings (120, 121) intended to cooperate with the annular plate (44) and having an end support (131) of the shaft (18) of the rotor (16) and which are capable of allowing the module (10) to be lifted, and a removable intermediate support (128) connecting the shaft (18) of the rotor (16) to the stator housing (14).

10. Tooling according to claims 3 and 6 taken in combination, **characterised in that** it has ninth means for lifting the frame having slings (120, 132) intended to cooperate with the annular plate (44) and with the second support (94), and which are capable of allowing the frame (24) to be lifted.

11. Tooling according to claim 7 or claim 8, **characterised in that** the frame (24) has an open shape that is trapezoid or U-shaped and **in that** it has at least one horizontal leg (48) capable of resting on the trolley (38) and two legs (50, 52), including at least one vertical leg (50), of which the ends carry the bearings (26, 28) of the frame (24).

12. Method for adjustment before balancing of a balancing machine (12) and of tooling according to claim 11 using a calibration assembly (10') according to claim 11, **characterised in that** it is performed with a calibration assembly (10') comprising :
- a reference stator housing (14'), consisting of a stack of pig moulds (134) of a mass corresponding to that of the stator (14) of the module (10), and which is intended to rest on the frame (24) in a position corresponding substantially to the point of application of the weight of the stator housing (14) of the module (10); and
- a balanced reference rotor (16'), having a moment of inertia and moment of unbalance corresponding substantially to the rotor of the module (16) to be balanced.
and **characterized in that** it has:
- a first step of static adjustment of the balancing machine (12), during which the semi-cylindrical receiving bearing surfaces (88, 89) of the balancing machine are adjusted so that they are coaxial;
- a second step during which the reference rotor (16') and the reference stator housing (14') are installed in the frame (24);
- a third step during which the frame (24) fitted with the reference rotor (16') and the reference stator housing (14') is transferred onto the semi-cylindrical receiving bearing surfaces of the balancing machine;
- a fourth step of dynamic adjustment on the balancing machine, during which the vertical position of the rollers (92) is adjusted by adjusting the plate (90) relative to the second support (94), so that the axes A of the bearings are parallel to an axis B of a drive shaft of the balancing machine (12), then the plate (90) and the second support (94) are perforated and rods (96) are inserted into the perforations made in order to define the position of the plate (90), and lastly the plate (90) is locked relative to the second support (94).

13. Method for balancing a turbine engine module (10) in a balancing machine (12),, **characterised in that** it has:
- a first step of lifting and positioning, using the eighth means for lifting, a module (10) in a frame (24) received in the fifth means (38) for transporting tooling according to claims 1 to 11;
- a second step of transporting the module (38) fitted with the frame (24) to the balancing machine (12), using the fifth means for transport (35);
- a third step of lifting and transferring the module (10) fitted with the frame (24) into the balancing machine (12) using the ninth means for lifting; and
- a fourth step of balancing the module (10) in the balancing machine (12).
